# FASCICULE DE BREVET EUROPEEN

(11) **EP 2 118 908 B1**
(45) Date de publication et mention de la délivrance du brevet: **23.02.2011**
(21) Numéro de dépôt: 08775708.4
(22) Date de dépôt: 11.03.2008
(51) Int. Cl.: H01B 11/04, H04N 7/10

(54) **DISPOSITIF DE DIFFUSION DE DONNÉES AUDIO ET VIDÉO**
VORRICHTUNG ZUR AUSSTRAHLUNG VON AUDIO- UND VIDEODATEN
DEVICE FOR BROADCASTING AUDIO AND VIDEO DATA

(30) Priorité: 13.03.2007 FR 0753796
(43) Date de publication de la demande: 18.11.2009
(73) Titulaire: SAGEMCOM BROADBAND SAS, 92500 Rueil Malmaison (FR)
(72) Inventeur: NOGIER, Jean-Marc, F-78600 Le Mesnil Le Roi (FR); MORARD, Jean Pierre, F-92200 Neuilly sur Seine (FR)
(74) Mandataire: Schmit, Christian Norbert Marie
(86) Numéro de dépôt international: PCT/FR2008/050407
(87) Numéro de publication internationale: WO 2008/129192

(56) Documents cités:
- EP-A- 1 617 664
- WO-A-01/08167
- WO-A-99/09787
- DE-A1- 1 440 926
- FR-A- 2 806 572
- FR-A- 2 888 424
- GB-A- 2 059 669

## Description

La présente invention se rapporte à un dispositif de diffusion de données audio et vidéo. Le type de réseau informatique câblé le plus répandu actuellement utilise un câblage à paires torsadées. On distingue généralement deux types de paires torsadées, les paires blindées et les paires non blindées. Dans sa forme la plus simple, le câble à paires torsadées est constitué de deux brins de cuivre entrelacés en torsade et recouverts d'isolants. L'entrelacement permet de supprimer les interférences. Cependant, un câble à paires torsadées est généralement fabriqué à partir de plusieurs paires torsadées regroupées et placées à l'intérieur d'une gaine protectrice.

Les câbles à paires torsadées permettent des transferts de données sur un segment d'une longueur maximale d'environ 100 mètres. Toutefois, ces câbles ne permettent pas toujours de garantir l'intégrité des données sur de longues distances avec des débits élevés.

Les câbles à paires torsadées sont classés par catégorie, c'est à dire qu'il existe plusieurs catégories de câbles ayant des caractéristiques de transfert différentes. Les câbles de catégorie 1 sont des câbles téléphoniques traditionnels. De tels câbles de catégorie 1 permettent le transfert de voix mais pas le transfert de données. Les câbles de catégories 2 à catégories 5e sont de câbles permettant le transfert de données. Ces câbles sont composés de quatre paires torsadées en cuivre. Les câbles de catégorie 2 permettent un débit maximum de 4 Mbit/s. Les câbles de catégorie 3 permettent un débit maximum de 10 Mbit/s. Les câblés de catégorie 4 permettent un débit maximum de 16 Mbit/s. Les câbles de catégorie 5 permettent un débit maximum de 100 M/bit/s, et les câbles de catégorie 5e permettent un débit maximum de 1 Gbit/s. Ce type de câblage peut, par exemple, être raccordé à un connecteur de type RJ45.

Le transfert de données audio et vidéo entre un serveur, typiquement un ordinateur, et un client, typiquement un décodeur pouvant être intégré dans une tablette LCD à pile, dans un tel type de réseau nécessite généralement un encodage des données audio et vidéo. Cet encodage est effectué de manière spatio-temporelle. Un encodage spatio-temporel n'encode intégralement qu'une partie des images à transmettre afin de reconstituer une vidéo. Ainsi, par exemple, seule une image sur cinq peut être encodée intégralement. Les images non encodées intégralement se réfèrent directement, pour les parties non encodées, aux parties identiques encodées par les images intégralement encodées précédemment. Ainsi, une image non intégralement encodée ne comporte que les parties de l'image ayant été modifiées par rapport aux images précédentes et les adresses des parties d'images non modifiées des images précédemment encodées. Par ailleurs certains type d'encodage compressent en un seul bloc les données audio et les données vidéo ainsi que la signalisation permettant de diffuser ces données correctement.

Cette compression permet un gain d'utilisation en bande passante durant le transfert. Pour les câbles tels que ceux décris ci dessus, ce gain de bande passante est non négligeable. Le décodage est effectué par le client une fois ce décodage effectué, les données audio et vidéo sont diffusée par le client via son propre moyen de diffusion, par exemple une tablette LCD à pile comportant un écran et des enceintes ainsi que le décodeur.

Ainsi aujourd'hui une norme utilisée est, par exemple, du H264. Plus particulièrement du « transport stream H264 », aussi appelé par la suite TSH264. Le TSH264 comporte aussi bien les données audio que les données vidéo. Par ailleurs le TSH264 comporte aussi les données de signalisation permettant la synchronisation des données audio et des données vidéo.

Cependant, pour économiser de la bande passante les données doivent être compressées le plus possible. Cette compression importante impose une grande complexité aussi bien dans l'encodage que dans le décodage. En effet le serveur doit non seulement effectuer une compression d'image mais doit effectuer de nombreux calculs pour déterminer les adresses et les données à encoder. De même, le client décode ces données audio et vidéo suite à de nombreux calculs. Pour un client tel qu'un simple décodeur, cette complexité impose une grande complexité de fabrication de puces de décodage, le décodeur effectuant le décodage au niveau matériel. Par ailleurs cette complexité augmente sensiblement la consommation électrique d'un tel dispositif du fait du nombre de calculs à effectuer pour encoder et décoder. Cette surconsommation d'énergie rend délicate
l'utilisation de certains appareils tel qu'une tablette LCD à pile dans lesquels les réserves d'énergie sont limitées.

Les nouvelles technologies développées en matière de câblage réseau permettent un débit bien supérieur à celui autorisé par les câblages de catégorie 5e par exemple. Ainsi un nouveau type de câblage, de catégorie 7, permet un débit de 10 Gbits sur une distance de 100m. Par exemple, un nouveau type de connecteur est récemment apparu, le GG45 ( marque déposée). Un tel connecteur avec un câblage de catégorie 7 permet des retransmissions pouvant aller jusqu'à une fréquence de 600 MHz.

Un tel câblage de catégorie 7 comporte six paires torsadées là ou le RJ45 n'en a que quatre. Dans ce câblage de catégorie 7 les six paires sont utilisées pour avoir un débit élevé jusqu'à une grande distance.

Il est connu le document FR-A-2 806 572 qui décrit un système multimédia de distribution de signaux hautes fréquences dans un réseau câblé en paires torsadées. Ce système comprend :
- un premier moyen d'adaptation d'impédance pour recevoir au moyen d'un câble coaxial un signal haute fréquence (HF) et transmettre sur une paire torsadée de catégorie 5, 6 ou 7 ledit signal ;
- un second moyen d'adaptation d'impédance pour recevoir le signal HF venant de la paire torsadée de catégorie 5, 6 ou 7 et transmettre le signal HF vers un terminal donné au moyen d'un câble coaxial.

Le premier moyen d'adaptation d'impédance est un balun désymétriseur qui peut être passif ou actif, Le second moyen d'adaptation d'impédance est un balun désymétriseur qui peut être passif ou actif avec amplification du signal HF et contrôle automatique de gain.

Cependant, la présence de six paires câbles torsadées ne change rien à la complexité de l'encodage et du décodage des données. Ainsi le client qui décode les données est toujours aussi complexe à réaliser et consomme toujours autant d'énergie. La tendance actuelle, et ce depuis le début de l'ère du numérique, est de vouloir compresser le plus possible les données à transférer afin de gagner le maximum possible en utilisation de bande passante.

Afin de réaliser une puce de décodage simple et consommant moins d'énergie, l'invention prévoit d'utiliser les capacités en bande passante offertes par le câblage réseau de catégorie 7. Plus particulièrement l'invention prévoit de réduire la complexité de l'encodage et du décodage des données audio et vidéo afin d'alléger les tâche du serveur et du client tout en utilisant les nouvelles capacités des câbles réseau afin de garder un taux de transfert correct. Cette réduction de complexité d'encodage et de décodage permet la construction d'une puce de décodage simple. De plus la simplicité des calculs à effectuer afin de décoder les données audio et vidéo permet une réduction de la consommation d'énergie et du temps utilisé par la puce de décodage pour effectuer ces calculs. Pour réduire la complexité de l'encodage et du décodage des données, l'invention prévoit d'utiliser des codecs simple n'encodant que les données vidéo de manière spatiale. Un encodage uniquement spatial est un encodage dans lequel toutes les images constituant une vidéo sont encodées intégralement, c'est à dire qu'aucune image ne fait référence à une autre image pour être affichée. De tels codecs peuvent, par exemple, être du type JPEG2000, PNG, MJPEG ou encore ZIP.

L'utilisation de tels codecs, s'ils sont simples à mettre en place, prend beaucoup de bande passante. Les câbles de catégorie 7 offrent cependant une bande passante suffisante pour permettre l'utilisation de l'invention de ces codecs dans de bonnes conditions. Un autre avantage d'un câblage de catégorie 7 est de permettre à chacune des paires torsadées du câble réseau de supporter une application sans incidence aucune sur les autres paires torsadées du même câble.

L'invention prévoit que les données vidéo transitent via le réseau en utilisant quatre paires torsadées d'un câble à six paires torsadées de catégorie 7. Par ailleurs l'invention prévoit que les données audio transitent quant à elles par une paire torsadée non utilisée pour le transfert des données vidéo. Enfin, l'invention prévoit que la signalisation, en particulier la synchronisation des données audio et des données vidéo, transite par la dernière paire torsadée, c'est à dire par la paire torsadée non utilisée pour le transfert des données audio ou des données vidéo. Un tel dispositif d'utilisation du câblage réseau permet, grâce à l'utilisation d'un câble de catégorie 7 comportant six paires torsadées, de conserver un taux de transfert correct. De plus l'invention permet de simplifier les solutions d'encodage et de décodage. Les éléments matériels, tels que les puces de décodage, sont eux aussi simplifiés. Enfin la simplification des calculs effectués pour l'encodage et le décodage permet une économie d'énergie et de temps importante, ce qui n'est pas négligeable pour l'utilisation d'appareil fonctionnant sur pile ou batteries tels que des tablettes LCD.

Selon l'invention, les données vidéo, audio, et de signalisation, sont séparées avant l'encodage des données vidéo et des données audio.

L'invention a donc pour objet un dispositif de diffusion de données audio et vidéo comportant un serveur et un client,
- un câble réseau où circulent les données audio et vidéo entre le serveur et le client,
- le câble réseau comporte six paires de câbles torsadés
   caractérisé en ce que
- les données vidéo transitent via le câble réseau entre le serveur et le client en passant uniquement par quatre paires torsadées,
- les données audio transitent via le câble réseau entre le serveur et le client en passant par une unique paire torsadée non utilisée,
- des données de signalisation synchronisant les données audio et les données vidéo transitent via le câble réseau entre le serveur et le client en passant par une unique paire de câble torsadée restante.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :

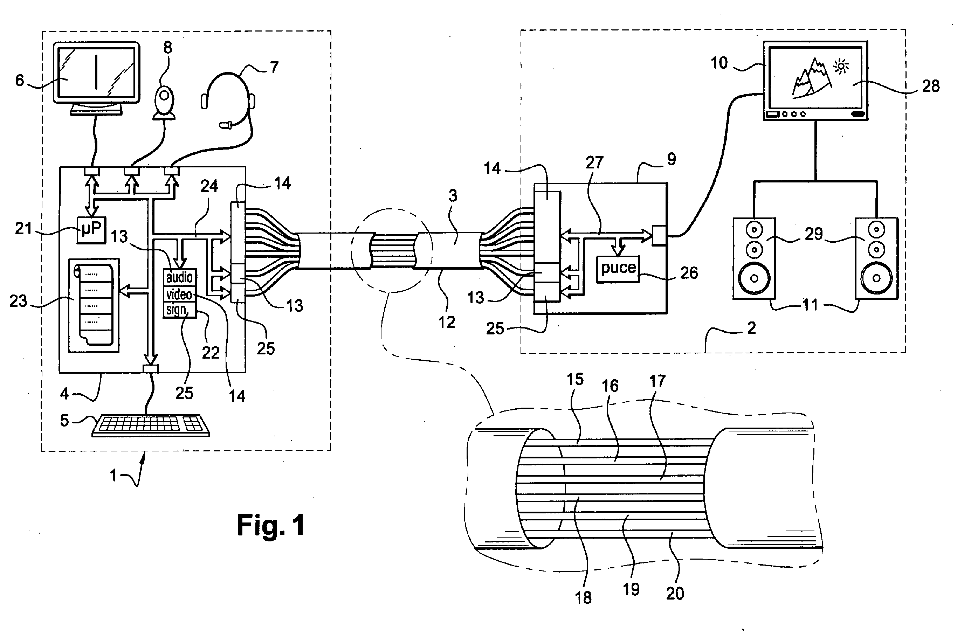

- Figure 1 : Un schéma du dispositif de diffusion de données audio et vidéo selon l'invention.

La figure 1 représente un schéma du dispositif de diffusion de données audio et vidéo selon l'invention. Un tel dispositif selon l'invention comporte un serveur 1, par exemple un ordinateur 1, un client 2, par exemple une tablette LCD 2, et un câblage réseau 3. L'ordinateur 1 comporte une unité centrale 4, un clavier 5, un moniteur 6 ainsi qu'un microphone 7 et une caméra numérique 8. La tablette LCD 2 comporte un décodeur 9, un écran 10 et des enceintes 11. Le câblage réseau 3 comporte un câble 12 de catégorie 7 permettant le transfert de données audio 13 et de données vidéo 14 entre le serveur 1 et le client 2. Un tel câble de catégorie 7 comporte six paires de câbles torsadés, respectivement les paires 15, 16, 17, 18, 19 et 20. Un tel câblage peut être par exemple du type GG45 (marque déposée).

Dans un tel dispositif, les données audio 13 sont récupérées via le microphone 7. Les données vidéo 14 sont récupérées via la caméra 8. L'unité centrale 4 comporte un microprocesseur 21, une mémoire de données 22, une mémoire de programme 23 et un ensemble de bus interne 24. Le microprocesseur 21 effectue les calculs relatifs aux applications en cours sur le serveur 1. La mémoire de données 22 stocke les données telles que les données audio 13 ou les données vidéo 14. La mémoire de programme 23 stocke les programmes à appliquer sur le serveur 1. Enfin les bus internes 24 permettent de connecter tous les éléments internes de l'unité centrale entre eux. Par ailleurs les bus interne permettent la connexion entre les éléments internes de l'unité centrale et les éléments externes.

Les données audio 13 et les données vidéo 14 récupérées respectivement par le microphone 7 et la caméra 8 sont stockées dans la mémoire de donnée 22. Ces données sont traitées par le microprocesseur 21 afin de constituer une séquence audio/vidéo. Cette séquence audio/vidéo est produite suivant les instructions données par la mémoire de programme 23. Typiquement cette séquence audio/vidéo est éditée suivant un codec défini dans la mémoire de programme 23. Le codec permet en outre l'édition de données de signalisations 25. Ces données de signalisation 25 permettent la diffusion de la séquence audio/vidéo, en particulier ces données de signalisation 25 permettent une diffusion synchronisée entre les données audio 13 et les données vidéo 14.

La séquence audio/vidéo éditée par le serveur 1 est envoyée, par le serveur 1, au client 2 via le réseau 3. Le client décode les données de la séquence audio vidéo reçue et les diffuse alors normalement.

Le client 2 comporte un puce de décodage 26, des bus internes 27 un moyen de diffusion vidéo 28, typiquement un écran 28, et un moyen de diffusion audio, typiquement des enceintes 29. Les bus internes 27 permettent la connexion entre les différéntes éléments du client 2. Ces bus internes 27 permettent aussi la connexion entre le client 2 et le réseau 3.

Un câblage réseau 3 de catégorie 7 permet un débit élevé sur une grande distance. Un débit de 10 gigabytes sur une distance de 100 mètres peut être atteint sans difficultés, les capacités de débit pouvant encore être augmentées. L'utilisation des six paires 15 à 20 torsadées se fait actuellement pour faire passer les données audio 13 et les données vidéo 14 encodées ensemble. Ainsi par exemple avec du « transport stream H264 », les données audio 13, les données vidéo 14 et des données de signalisation 25 sont encodées ensemble, c'est à dire en un seul bloc, par le serveur 1. Ces données audio 13, vidéo 14, et de signalisation 25 sont compressées de manière complexe dans le but d'économiser le plus possible la bande passante à utiliser pour leur transfert. De fait, toutes les technologies développées jusqu'à maintenant ont tendance à compresser le plus possible les données qui transitent sur un réseau 3. Cette compression maximale recherchée rend de plus en plus complexe l'encodage et le décodage des données audio 13 et des données vidéo 14. Cette complexité des données impose un travail au serveur 1 complexe. De même le client 2 qui doit décoder ces données est complexe à réaliser.

L'amélioration constante des débits possibles avec le réseau 3 existant actuellement rend possible de conserver un débit élevé tout en simplifiant l'encodage et le décodage des données audio 13 et des données vidéo 14. Une simplification de l'encodage et du décodage de ces données audio/vidéo permettrait de simplifier le client 2 amené à décoder ces données, ainsi qu'à alléger la tâche d'encodage du serveur 1.

L'invention prévoit donc l'utilisation de plus de bande passante que les dispositifs d'encodage actuels, ainsi qu'une utilisation différente de l'utilisation classique des paires torsadées d'un câble 12 de réseau 3 à six paires torsadées. Plus particulièrement, l'invention prévoit de ne pas encoder en un seul bloc les données audio 13, les données vidéo 14 et les données de signalisation 25.

L'invention prévoit de faire transiter ces données sur des paires torsadées spécifiques. Ainsi le dispositif selon l'invention encode les données vidéo 14 par un codec simple spatial. Un tel codec effectue l'encodage de toutes les images constituant une séquence audio/vidéo, contrairement à un codec encodant de manière spatio-temporelle tel que, par exemple, du H264.

Les données vidéo 14 transitent donc, selon l'invention, en utilisant quatre paires torsadées uniquement. Les paires torsadées utilisées pour faire transiter les données vidéo 14 peuvent par exemple être les paires 15, 16, 17 et 18. Les données audio 13 transitent sur une unique paire torsadée. La paire torsadée sur laquelle transitent les données audio 13 est une paire non utilisées ni pour faire transiter les données vidéo 14 ni pour les données de signalisation 25. Cette paire torsadée utilisée pour faire transiter les données audio 13 peut par exemple être la paire torsadée 19. Les données de signalisation 25 transitent elles aussi sur une unique paire torsadée. Cette paire torsadée étant la dernière paire torsadée disponible, c'est à dire la paire ou ne transitent ni les données vidéo ni les données audio, peut être par exemple la paire torsadée 20. La transition de ces données sur des paires torsadées indépendantes est rendu possible par l'utilisation du câblage réseau de catégorie 7.

L'encodage des données vidéo 14 selon l'invention peut donc se faire suivant un codec simple spatial tel que le JPEG2000, le MJPEG, le zip ou tout autre codec spatial simple. Un tel codec simple encode les données vidéo 14 de telle sorte que le transit des ces données vidéo 14 sur le réseau 3 utilise plus de bande passante que n'en utiliserait le transit de ces mêmes données vidéo 14 avec un codec spatio-temporel. Cependant un tel codec simple allège de manière significative la charge d'encodage et de décodage du serveur 1 et du client 2. De plus, un tel encodage simple diminue la consommation d'énergie du client 2 et du serveur 1 du fait du nombre de calculs moins important qu'ils ont à effectuer.

Selon l'invention, les données de signalisation 25, les données audio 13 et les données vidéo 14 sont séparée avant l'encodage des données vidéo 14 par le microprocesseur 21. Ceci permet de différencier ces données et de les faire transiter par le réseau séparément.

Le dispositif selon l'invention ne se limite pas à un câblage de catégorie 7 mais à tout type de comportant six paires de câbles torsadées et permettant la transition avec un débit suffisant pour le transfert de données audio/vidéo. Un tel câble peut permettre la transition des données audio/vidéo séparées sur des paires torsadées distinctes pour les données audio 13, les données vidéo 14 et les données de synchronisation 25.

La consommation d'énergie étant réduite en utilisant un dispositif selon l'invention, l'invention est particulièrement bien adaptée à tout appareil ayant une durée d'utilisation limitée pour des raisons de consommation d'énergie. Ces appareils peuvent par exemple être des tablettes LCD ou encore des téléphones portables, mais également tout type d'appareil, permettant le transfert de données audio 13 et de données vidéo 14 par un réseau câblé.

Les données audio 13 peuvent transiter via le réseau 3 directement sous un format analogique ou être encodées par le serveur 1. L'avantage des données audio sous format analogique étant que le client 2 à une charge de traitement de ces données audio 13 réduite. Cependant le serveur 1 peut encoder ces données audio 13 par exemple à un format de 64 Kbits.

## Revendications

1. Dispositif de diffusion de données audio et vidéo comportant un serveur (1) et un client (2),
- un câble (12) réseau où circulent les données audio (13) et vidéo (14) entre le serveur et le client,
- le câble réseau est un câble réseau de catégorie 7 comportant six paires de câbles torsadés (15-20)
**caractérisé en ce que**
- les données vidéo transitent via le câble réseau entre le serveur et le client en passant uniquement par quatre (15-18) paires torsadées,
- les données audio transitent via le câble réseau entre le serveur et le client en passant par une unique paire (19) torsadée non utilisée,
- des données de signalisation (12) synchronisant les données audio et les données vidéo transitent via le câble réseau entre le serveur et le client en passant par une unique paire de câble (20) torsadée restante,
- les données vidéo sont encodées par un codec n'encodant les données vidéo que de manière spatiale.

2. Dispositif selon la revendication 1 **caractérisé en ce que** les données audio, les données vidéo et des données de signalisation (25) sont séparées avant l'encodage par le serveur des données vidéo.

3. Dispositif selon l'une des revendications 1 à 2 **caractérisé en ce que** le câble réseau permet la transition des données de manière indépendantes sur des paires torsadées distinctes.

4. Dispositif selon l'une des revendications 1 à 3 **caractérisé en ce que** l'encodage des données vidéo est effectué en JPEG2000, en MJPEG ou en ZIP.

5. Dispositif selon l'une des revendications 1 à 4 **caractérisé en ce que** le client est une tablette vidéo LCD ou un téléphone portable.

6. Dispositif selon l'une des revendications 1 à 5 **caractérisé en ce que** les données audio transitent sur le réseau au format analogique.

7. Dispositif selon l'une des revendications 1 à 6 **caractérisé en ce que** les données audio transitant sur le câble réseau sont compressées.

## Claims

1. Device for transmitting audio data and video data comprising a server (1) and a client (2),
- a network cable (12) via which audio data (13) and video data (14) are transmitted between the server and the client,
- the network cable being a network cable of category 7 comprising six pairs of twisted cables (15-20),
**characterized in that**
- the video data are transmitted via the network cable between the server and the client through only four twisted pairs (15-18),
- the audio data are transmitted via the network cable between the server and the client through a unique twisted pair (19) that is not used,
- signaling data (12) synchronizing the audio data and the video data are transmitted via the network cable between the server and the client through a unique pair of remaining twisted cables (20),
- the video data are encoded by means of a codec encoding the video data only in a spatial manner.

2. Device according to claim 1, **characterized in that** the audio data, the video data and the signaling data (25) are separated before encoding the video data by the server.

3. Device according to any one of the claims 1 to 2, **characterized in that** the network cable enables the data transmission independently through distinct twisted pairs.

4. Device according to any one of the claims 1 to 3, **characterized in that** the video data are encoded in the JPEG2000, MJPEG or ZIP format.

5. Device according to any one of the claims 1 to 4, **characterized in that** the client is a video LCD tablet or a portable telephone.

6. Device according to any one of the claims 1 to 5, **characterized in that** the audio data are transmitted via the network in the analog format.

7. Device according to any one of the claims 1 to 6, **characterized in that** the audio data transmitted via the network cable are compressed.

## Patentansprüche

1. Vorrichtung zur Übertragung von Audiodaten und Videodaten mit einem Server (1) und einem Kunden (2),
- einem Netzwerkkabel (12), über welches die Audiodaten (13) und Videodaten (14) zwischen dem Server und dem Kunden übertragen werden,
- wobei das Netzwerkkabel ein Netzwerkkabel der Kategorie 7 mit sechs verdrillten Kabelpaaren (15-20) ist,
**dadurch gekennzeichnet, dass**
- die Videodaten über das Netzwerkkabel zwischen dem Server und dem Kunden durch nur vier verdrillte Kabelpaare (15-18) übertragen werden,
- die Audiodaten über das Netzwerkkabel zwischen dem Server und dem Kunden durch ein einziges unverwendetes verdrilltes Kabelpaar übertragen werden,
- die Anzeigedaten (12), welche die Audiodaten und Videodaten synchronisieren, über das Netzwerkkabel zwischen dem Server und dem Kunden durch ein einziges verbleibendes verdrilltes Kabelpaar (20) übertragen werden,
- die Videodaten mittels eines Codecs verschlüsselt werden, welches die Videodaten nur auf eine räumliche Weise verschlüsselt.

2. Vorrichtung nach Anspruch 1, **dadurch gekennzeichnet, dass** die Audiodaten, Videodaten und Anzeigedaten (25) vor der Serververschlüsselung der Videodaten abgetrennt werden.

3. Vorrichtung nach einem der Ansprüche 1 bis 2, **dadurch gekennzeichnet, dass** das Netzwerkkabel die Datenübertragung auf eine unabhängige Weise durch unterschiedliche verdrillte Kabelpaare ermöglicht.

4. Vorrichtung nach einem der Ansprüche 1 bis 3, **dadurch gekennzeichnet, dass** die Videodaten im JPEG2000, MJPEG oder ZIP Format verschlüsselt werden.

5. Vorrichtung nach einem der Ansprüche 1 bis 4, **dadurch gekennzeichnet, dass** der Kunde ein LCD Video Tablet oder ein Mobiltelefon ist.

6. Vorrichtung nach einem der Ansprüche 1 bis 5, **dadurch gekennzeichnet, dass** die Audiodaten über das Netzwerk im Analogformat übertragen werden.

7. Vorrichtung nach einem der Ansprüche 1 bis 6, **dadurch gekennzeichnet, dass** die über das Netzwerkkabel übertragenen Audiodaten komprimiert sind.
